# EUROPEAN PATENT SPECIFICATION

(11) **EP 2 413 051 B1**
(45) Date of publication and mention of the grant of the patent: **07.11.2018**
(21) Application number: 09842266.0
(22) Date of filing: 27.03.2009
(51) Int. Cl.: F24F 7/08, F24F 12/00, F24F 13/20

(54) **HEAT EXCHANGE AND VENTILATION DEVICE**
WÄRMETAUSCH- UND LÜFTUNGSVORRICHTUNG
DISPOSITIF D'ÉCHANGE DE CHALEUR ET DE VENTILATION

(43) Date of publication of application: 01.02.2012
(73) Proprietor: Mitsubishi Electric Corporation, Tokyo 100-8310 (JP)
(72) Inventor: SUZUKI, Masanobu, Tokyo 100-8310 (JP); MORIKAWA, Masaki, Nakatsugawa-shi Gifu 508-0041 (JP); YAMAGUCHI, Masashi, Tokyo 100-8310 (JP); TAKAHASHI, Junichi, Tokyo 100-8310 (JP); UEDA, Masahiro, Tokyo 100-8310 (JP)
(74) Representative: Pfenning, Meinig & Partner mbB
(86) International application number: PCT/JP2009/056304
(87) International publication number: WO 2010/109652

(56) References cited:
- DE-A1- 19 902 267
- JP-A- 5 118 603
- JP-A- 03 251 634
- JP-A- 2001 263 752
- JP-U- 4 003 695
- JP-U- S63 190 838

## Description

### TECHNICAL FIELD

The present invention relates to a heat exchange ventilation apparatus that performs heat exchange between supply air and exhaust air via a heat exchanger.

### BACKGROUND ART

Conventionally, there is disclosed a heat exchange ventilation apparatus that includes a supply air passage, which is partially formed by one fluid passage of a stacked-type hexahedral heat exchanger built in a casing formed into a hexahedron and through which an airflow is directed to the inside of a room from the outside of the room passes by a blower, and an exhaust air passage, which is independent from this supply air passage along the whole path and is partially formed by the other fluid passage of the heat exchanger and through which an airflow is directed to the outside of the room from the inside of the room passes by a blower, in which the heat exchanger is arranged in the casing so that one fluid passage and the other fluid passage intersect with each other in an approximately horizontal direction and an approximately vertical direction, the blower that forms a supply air flow is arranged on one side of both ends that do not face the fluid passage of the heat exchanger, the blower that forms an exhaust air flow is arranged on the other side, an indoor-side outlet that is an outlet end of the supply air passage and an indoor-side inlet that is an inlet end of the exhaust air passage are formed separately in a lower surface of the casing that faces an opened surface of one fluid passage of the heat exchanger, and a window, from which a function unit for improving air quality can be mounted on the supply air passage in the casing, is provided to be openable and closable in one side surface that faces an outlet side of the fluid passage forming the supply air passage of the heat exchanger in this casing (for example, see Patent Document 1).

The above described blower is screwed onto three surfaces or two surfaces of the casing formed into a hexahedron. Typically, for fixing the blower in the casing, the blower is mounted and fixed to the high-strength casing itself for vibration suppression at the time of operation, bounce suppression at the time of transportation, protection from impact caused by dropping or the like, and the like. From the document JP S63 190838 U, a ventilation device with a box is known, wherein a guiding element for air flow is placed in the box. JP S63 190838 U thereby discloses a heat exchange ventilation apparatus according to the preamble of claim 1 and claim 2.

Patent Document 1: Japanese Patent No. 3903844

### DISCLOSURE OF INVENTION

### PROBLEM TO BE SOLVED BY THE INVENTION

However, in the heat exchange ventilation apparatus, a seal material needs to be inserted between casing parts forming an air passage for reducing air leakage as much as possible, and there is a problem that the seal material is inserted into many places and therefore the assemblability and the maintenability are low.

Moreover, although air leakage can be prevented by accommodating the blower in a seamless molded part, the blower is fixed to the casing with screws penetrating through the molded part for screwing the blower onto a plurality of surfaces of the casing and thus a countermeasure for air leakage from screwed portions is needed.

The present invention is achieved in view of the above, and has an object to obtain a heat exchange ventilation apparatus, in which air leakage between a supply air passage and an exhaust air passage does not easily occur, which is excellent in assemblability and maintenability, and which is low in cost.

### MEANS FOR SOLVING PROBLEM

In order to solve the aforementioned problem and attain the aforementioned object, a heat exchange ventilation apparatus according to one aspect of the present invention is constructed in such a manner that a supply air passage that suctions outdoor air from an outdoor-side inlet by a supply air blower and supplies to an inside of a room from an indoor-side outlet through a supply-air heat exchange passage of a heat exchanger and an exhaust air passage that suctions indoor air from an indoor-side inlet by an exhaust air blower and discharges to an outside of the room from an outdoor-side outlet through an exhaust-air heat exchange passage of the heat exchanger are formed in a rectangular parallelepiped casing, wherein only one surface of the supply air blower is screwed onto one surface of the casing, and other surfaces of the supply air blower are supported on an inner surface of an integrally-molded suction chamber that accommodates the supply air blower and forms part of the supply air passage.

### EFFECT OF THE INVENTION

The heat exchange ventilation apparatus according to the present invention has effects that air leakage between a supply air passage and an exhaust air passage does not easily occur, the assemblability and the maintenability are high, and the cost is low.

### BRIEF DESCRIPTION OF DRAWINGS

FIG. 1 is a perspective view illustrating an air passing state inside of an embodiment of a heat exchange ventilation apparatus according to the present invention.
FIG. 2 is a perspective view of an outdoor-side partition member in the embodiment.
FIG. 3 is a perspective view of the outdoor-side partition member in the embodiment in a direction different from that of FIG. 2.
FIG. 4 is a perspective view illustrating the inside of the heat exchange ventilation apparatus in the embodiment before incorporating a supply air blower.
FIG. 5 is a perspective view illustrating the inside of the heat exchange ventilation apparatus in the embodiment after incorporating the supply air blower.
FIG. 6 is an upper perspective view illustrating the supply air blower of the heat exchange ventilation apparatus in the embodiment.
FIG. 7 is a lower perspective view illustrating the supply air blower of the heat exchange ventilation apparatus in the embodiment.
FIG. 8 is a perspective view illustrating the outline of the heat exchange ventilation apparatus in the embodiment.

### EXPLANATIONS OF LETTERS OR NUMERALS

- 11: Heat exchanger
- 11a: Supply-air heat exchange passage
- 11b: Exhaust-air heat exchange passage
- 12a: Supply air filter
- 12b: Exhaust air filter
- 13: Casing
- 13a: Outdoor-side side plate
- 13b: Indoor-side side plate
- 14: Indoor-side partition member
- 15: Outdoor-side partition member
- 15a: Leading edge portion
- 15b: Suction chamber
- 15c: Blowing chamber
- 15d: Chamber outlet
- 15e: Concave curved surface
- 15f: One side portion
- 15g: Convex curved portion
- 15h: Accumulation portion
- 15i: Outlet portion
- 15s: Straightening plate
- 16: Supply air blower
- 16a: Blast fan
- 16b: Motor
- 16c: Fan casing
- 16d: Holding frame
- 16e: Mounting base
- 16f, 16g: Suspension arm
- 16h, 16i: Mounting flange
- 16j: Threaded hole
- 16m: Lower flange
- 16n: Side surface
- 16s: Screw
- 17: Exhaust air blower
- 21: Outdoor-side inlet
- 22: Supply air passage
- 23: Indoor-side outlet
- 25: Indoor-side inlet
- 26: Exhaust air passage
- 27: Outdoor-side outlet
- 31: Maintenance panel
- 33: Top plate
- 90: Heat exchange ventilation apparatus

### BEST MODE(S) FOR CARRYING OUT THE INVENTION

An exemplary embodiment of a heat exchange ventilation apparatus according to the present invention will be explained below in detail based on the drawings. This invention is not limited to this embodiment.

### Embodiment

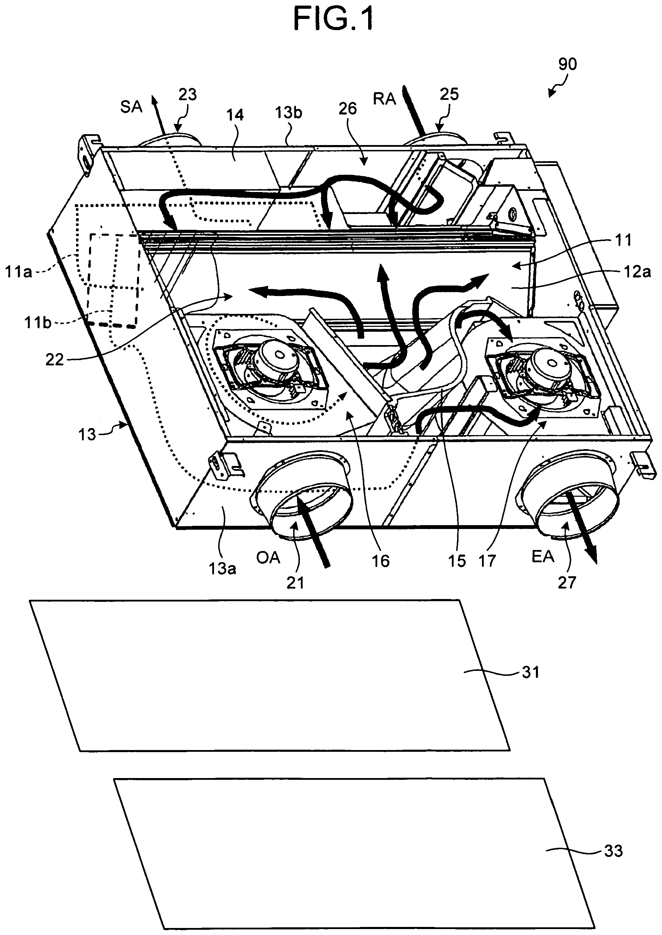

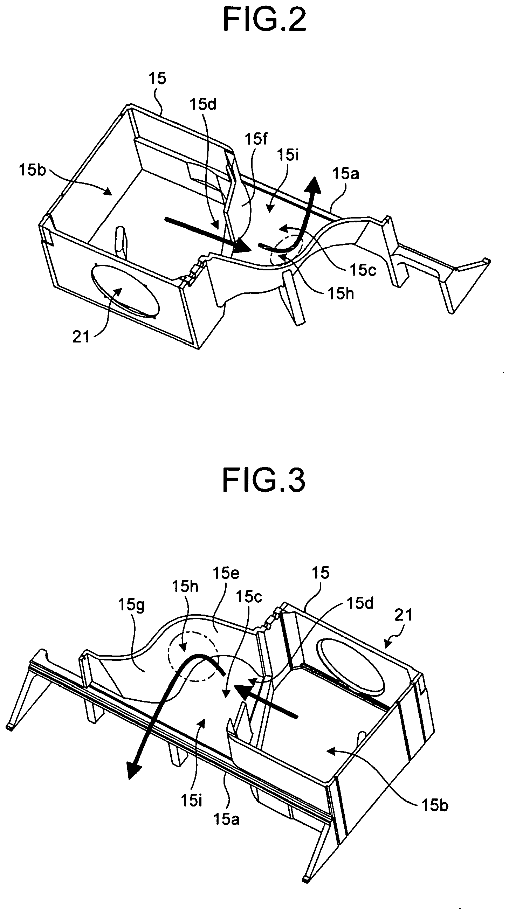

FIG. 1 is a perspective view illustrating an air passing state inside of an embodiment of a heat exchange ventilation apparatus according to the present invention, FIG. 2 is a perspective view of an outdoor-side partition member in the embodiment, and FIG. 3 is a perspective view of the outdoor-side partition member in the embodiment in a direction different from that of FIG. 2.

As shown in FIG. 1 to FIG. 3, a heat exchange ventilation apparatus 90 in the embodiment is provided with a heat exchanger 11, which performs heat exchange between outdoor air and indoor air, in a casing 13 formed into a rectangular parallelepiped box shape and performs ventilation inside a room while performing heat exchange by supplying air and exhausting air simultaneously.

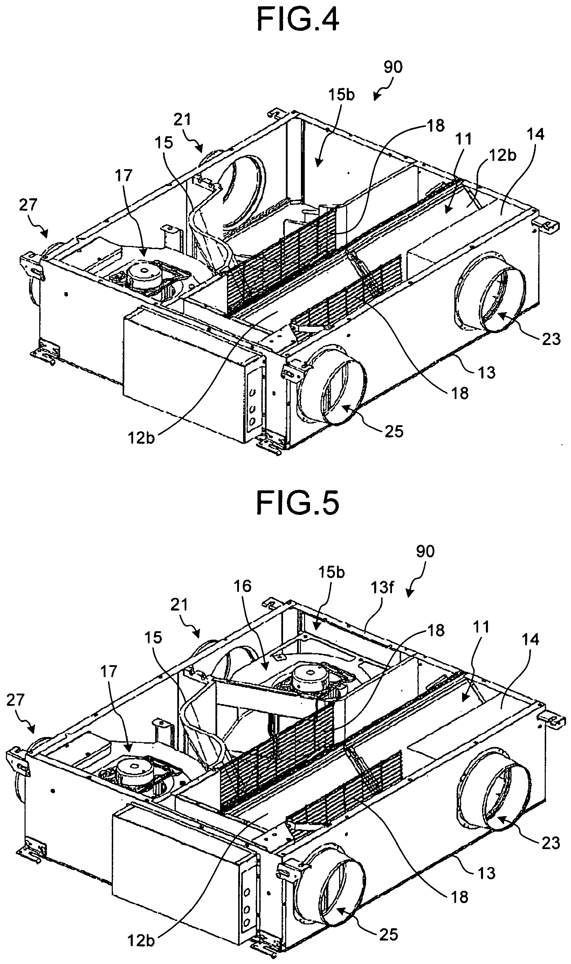

In the heat exchange ventilation apparatus 90, a supply air passage 22, which suctions outdoor air (OA: Outdoor Air) from an outdoor-side inlet 21 by a supply air blower 16 and supplies air (SA: Supply Air) from an indoor-side outlet 23 to the inside of a room through a supply-air heat exchange passage 11a of the heat exchanger 11, and an exhaust air passage 26, which suctions indoor air (RA: Return Air) from an indoor-side inlet 25 by an exhaust air blower 17 and exhausts air (EA: Exhaust Air) from an outdoor-side outlet 27 to the outside of the room through an exhaust-air heat exchange passage 11b of the heat exchanger 11, are formed. At the inlet of the supply-air heat exchange passage 11a, a supply air filter 12a is arranged, and, at the inlet of the exhaust-air heat exchange passage 11b, an exhaust air filter 12b (see FIG. 4) is arranged.

The heat exchanger 11, an indoor-side partition member 14, an outdoor-side partition member 15, the supply air blower 16, and the exhaust air blower 17 are arranged in the casing 13, so that the supply air passage 22 and the exhaust air passage 26 are formed. The supply air blower 16 is arranged in the left corner on the outdoor side of the casing 13 and the exhaust air blower 17 is arranged in the right corner on the outdoor side. After arranging these devices, the outdoor side (the blowers arranged side) of the casing 13 is covered by a top plate 33 and the indoor side (the heat exchanger 11 arranged side) is covered by a maintenance panel 31.

The heat exchanger 11 formed into a quadrangular prism shape is arranged across substantially the entire width of the casing 13 in parallel with an indoor-side side plate 13b on a side closer to the indoor-side side plate 13b in the casing 13, a square lower-side corner portion of the heat exchanger 11 is brought into contact with the bottom plate of the casing 13, and an upper-side corner portion opposing the lower-side corner portion is brought into contact with the maintenance panel 31 that covers the indoor side of the casing 13. Moreover, an indoor-side corner portion of the heat exchanger 11 is brought into contact with the indoor-side partition member 14 and an outdoor-side corner portion is brought into contact with a leading edge portion 15a (see FIGS. 2 and 3) of the outdoor-side partition member 15.

The supply air passage 22 is formed as an air passage that passes through, in turn, the outdoor-side inlet 21 provided in an outdoor-side side plate 13a of the casing 13, the inside of the supply air blower 16, the upper side of the outdoor-side partition member 15, the supply air filter 12a, the supply-air heat exchange passage 11a, the lower side of the indoor-side partition member 14, and the indoor-side outlet 23 provided in the indoor-side side plate 13b.

On the other hand, the exhaust air passage 26 is formed as an air passage that passes through, in turn, the indoor-side inlet 25 provided in the indoor-side side plate 13b of the casing 13, the side of the indoor-side partition member 14, the exhaust air filter 12b, the exhaust-air heat exchange passage 11b, the lower side of the outdoor-side partition member 15, the inside of the exhaust air blower 17, and the outdoor-side outlet 27 provided in the outdoor-side side plate 13a of the casing 13.

As shown in FIG. 2 and FIG. 3, in the upper side of the outdoor-side partition member 15 integrally molded of resin such as polystyrene foam, a suction chamber 15b, which is arranged in the left corner on the outdoor side of the casing 13, accommodates the supply air blower 16, and supplies outside air suctioned from the outdoor-side inlet 21 to the supply air blower 16, a blowing chamber 15c, which supplies outside air blown out from the supply air blower 16 to the heat exchanger 11, and a chamber outlet 15d, which communicates between the outlet of the supply air blower 16 and the blowing chamber 15c, are formed. The suction chamber 15b and the blowing chamber 15c are integrally molded of resin, so that there is no seam and the airtightness is high.

The blowing chamber 15c is arranged in the middle of the casing 13 between the supply air blower 16 and the exhaust air blower 17, is closed on the outdoor side (back portion), and has an outlet portion 15i that widens in a bell-mouth shape toward the heat exchanger 11. The chamber outlet 15d is provided in one side portion of the closed back portion of the blowing chamber 15c and the other side portion (wall portion) of the back portion becomes a concave curved surface 15e. An one side portion (wall portion) 15f on the outlet portion 15i side of the blowing chamber 15c widens toward the left side in FIG. 2 and the other side portion (wall portion) becomes a convex curved portion 15g that is smoothly continuous with the concave curved surface 15e of the back portion and widens largely toward the right side in FIG. 2. The back portion of the blowing chamber 15c becomes an accumulation portion 15h of blown out air.

The air blown out from the chamber outlet 15d impinges on the concave curved surface 15e of the back portion of the blowing chamber 15c, is accumulated in the accumulation portion 15h of the back portion, and is directed in the heat exchanger 11 direction, the pressure is converted from dynamic pressure into static pressure by the bell-mouth shape of the outlet portion 15i in which the passage cross-sectional area widens, and the air speed distribution at the inlet portion is uniformed over the whole length of the heat exchanger 11. Therefore, the heat exchange efficiency of the heat exchanger 11 can be improved. Moreover, the air speed distribution in the supply-air heat exchange passage 11a of the heat exchanger 11 is uniformed and thus the maximum air speed is lowered, so that the operation sound is reduced.

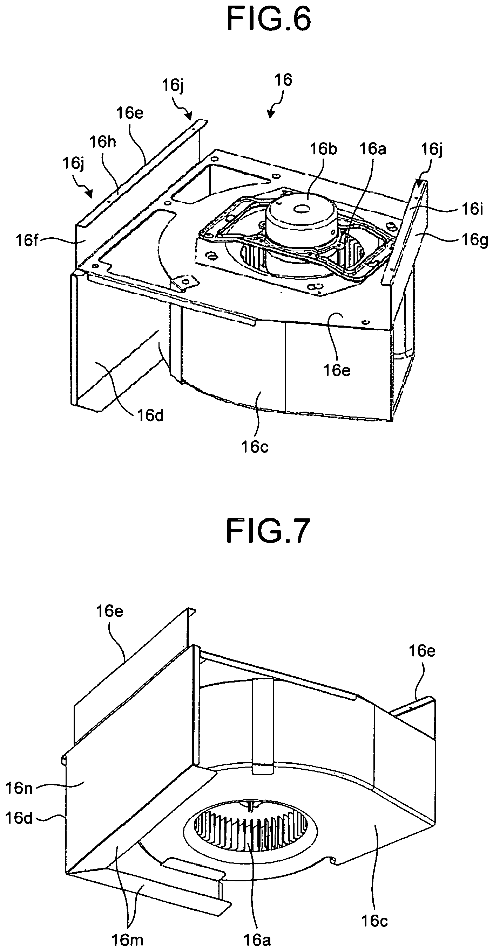

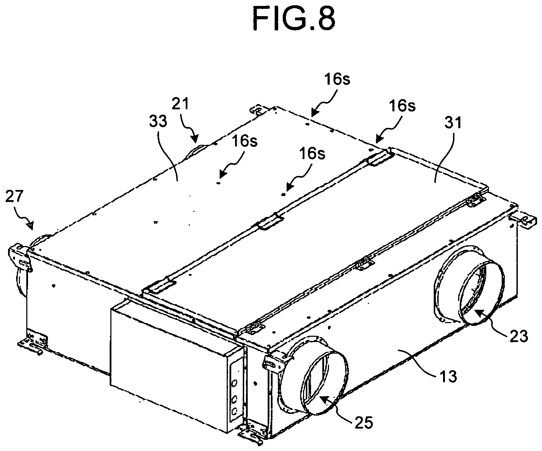

Next, the mounting structure of the supply air blower in the embodiment is explained with reference to FIG. 4 to FIG. 8. FIG. 4 is a perspective view illustrating the inside of the heat exchange ventilation apparatus in the embodiment before incorporating the supply air blower, FIG. 5 is a perspective view illustrating the inside of the heat exchange ventilation apparatus in the embodiment after incorporating the supply air blower, FIG. 6 is an upper perspective view illustrating the supply air blower of the heat exchange ventilation apparatus in the embodiment, FIG. 7 is a lower perspective view illustrating the supply air blower of the heat exchange ventilation apparatus in the embodiment, and FIG. 8 is a perspective view illustrating the outline of the heat exchange ventilation apparatus in the embodiment.

When assembling the heat exchange ventilation apparatus 90, as shown in FIG. 4, first, the indoor-side partition member 14, the heat exchanger 11, the supply air filter 12a, the exhaust air filter 12b, the outdoor-side partition member 15, a punching metal 18, and the exhaust air blower 17 are assembled in the casing 13, and as shown in FIG. 5, finally, the supply air blower 16 is accommodated and arranged in the suction chamber 15b of the outdoor-side partition member 15.

As shown in FIG. 6 and FIG. 7, the supply air blower 16 includes a blast fan 16a, a motor 16b that drives the blast fan 16a, a fan casing 16c that accommodates the blast fan 16a, a holding frame 16d of the fan casing 16c, and an mounting base 16e that is fixed to the fan casing 16c and the holding frame 16d and supports the motor 16b. The holding frame 16d and the mounting base 16e are made of a sheet metal.

The mounting base 16e includes two suspension arms 16f and 16g, the upper end portions of the suspension arms 16f and 16g are bent to form mounting flanges 16h and 16i, respectively, and two threaded holes 16j are provided in each of the mounting flanges 16h and 16i.

As shown in FIG. 5 to FIG. 8, the supply air blower 16 accommodated and arranged in the suction chamber 15b of the outdoor-side partition member 15 is screwed onto an upper flange 13f of the casing 13 and the top plate 33 by screwing screws 16s in the threaded holes 16j in the mounting flange 16h through the screw through holes in the upper flange 13f of the casing 13 and the top plate 33 and is screwed onto the top plate 33 by screwing the screws 16s in the threaded holes 16j in the mounting flange 16i through the screw through holes in the top plate 33. The supply air blower 16 is screwed only onto the top surface formed of the upper flange 13f and the top plate 33. The supply air blower 16 is suspended from the top surface of the casing 13, and five surfaces (the front, back, right, and left surfaces, and the bottom surface) other than the surfaces of the mounting flanges 16h and 16i of the supply air blower 16 are in contact with the inner surface of the suction chamber 15b to be held by the suction chamber 15b.

The heat exchange ventilation apparatus 90 in the embodiment is mainly arranged in an attic of a detached house, and an arrangement form includes a case of a horizontal arrangement (state shown in FIG. 8) and a case of a vertical arrangement (state rotated by 90° from the state shown in FIG. 8). In the case of the horizontal arrangement, a lower flange 16m of the holding frame 16d of a supply air blower 16 is supported on the bottom surface of the suction chamber 15b, and in the case of the vertical arrangement, a side surface 16n of the holding frame 16d is supported on the side surface of the suction chamber 15b.

As described above, the five surfaces other than the surfaces of the mounting flanges 16h and 16i of the supply air blower 16 are in contact with the inner surface of the suction chamber 15b to be held by the suction chamber 15b, so that the supply air blower 16 does not move in any direction and therefore the threaded holes 16j are not displaced at the time of the manufacturing and assembly and the maintenance.

Because the screwing surface of the supply air blower 16 is only one surface (top surface) of the casing 13, so that a countermeasure for air leakage such as insertion of a seal member needs to be performed only on one surface (top surface) of the casing 13. Therefore, the heat exchange ventilation apparatus is excellent in manufacturability and maintenability and is low in cost compared with a conventional one.

Moreover, such mounting structure of the supply air blower 16 is employed, so that the suction chamber 15b (the outdoor-side partition member 15) does not need to be divided for screwing the supply air blower 16 onto a plurality of surfaces of the casing 13, enabling to have an integral structure with high airtightness. Furthermore, the airtightness of the supply air passage 22 is high, so that air leakage from the supply air passage 22 to the exhaust air passage 26 is low.

In the heat exchange ventilation apparatus 90 explained above, the supply air blower 16 and the supply air passage 22, and the exhaust air blower 17 and the exhaust air passage 26 can be interchanged.

### INDUSTRIAL APPLICABILITY

As described above, the heat exchange ventilation apparatus according to the present invention is useful as a heat exchange ventilation apparatus that is arranged in an attic of a detached house and is horizontally arranged or vertically arranged.

## Claims

1. A heat exchange ventilation apparatus (90) in which a supply air passage (22) that suctions outdoor air from an outdoor-side inlet (21) by a supply air blower (16) and supplies to an inside of a room from an indoor-side outlet (23) through a supply-air heat exchange passage (11a) of a heat exchanger (11) and an exhaust air passage (26) that suctions indoor air from an indoor-side inlet (25) by an exhaust air blower (17) and discharges to an outside of the room from an outdoor-side outlet (27) through an exhaust-air heat exchange passage (11b) of the heat exchanger (11) are formed in a rectangular parallelepiped casing (13), **characterized in that**
only one surface of the supply air blower (16) is screwed onto one surface of the casing (13), and
other surfaces of the supply air blower (16) are supported on an inner surface of an integrally-molded suction chamber (15b) that accommodates the supply air blower (16) and forms part of the supply air passage (22).

2. A heat exchange ventilation apparatus (90) in which a supply air passage (22) that suctions outdoor air from an outdoor-side inlet (21) by a supply air blower (16) and supplies to an inside of a room from an indoor-side outlet (23) through a supply-air heat exchange passage (11a) of a heat exchanger (11) and an exhaust air passage (26) that suctions indoor air from an indoor-side inlet (25) by an exhaust air blower (17) and discharges to an outside of the room from an outdoor-side outlet (27) through an exhaust-air heat exchange passage (11b) of the heat exchanger (11) are formed in a rectangular parallelepiped casing (13), **characterized in that**
only one surface of the exhaust air blower (17) is screwed onto one surface of the casing (13), and
other surfaces of the exhaust air blower (17) are supported on an inner surface of an integrally-molded exhaust chamber (15c) that accommodates the exhaust air blower (17) and forms part of the exhaust air passage (26).

## Patentansprüche

1. Wärmeaustausch-Belüftungsvorrichtung (90), in welcher ein Zuluftdurchlass (22), der Außenluft aus einem außenseitigen Einlass (21) durch ein Zuluftgebläse (16) ansaugt und einer Innenseite eines Raumes aus einem innenseitigen Auslass (23) durch einen ZuluftWärmeaustauschdurchlass (11a) eines Wärmetauschers (11) zuführt, und ein Abluftdurchlass (26), der Innenluft aus einem innenseitigen Einlass (25) durch ein Abluftgebläse (17) ansaugt und zu einer Außenseite des Raumes aus einem außenseitigen Auslass (27) durch einen Abluftwärmeaustauschdurchlass (11b) des Wärmetauschers (11) ablässt, in einem rechteckigen quaderförmigen Gehäuse (13) ausgebildet sind, **dadurch gekennzeichnet, dass**
nur eine einzige Oberfläche des Zuluftgebläses (16) auf einer einzigen Oberfläche des Gehäuses (13) aufgeschraubt ist, und
andere Oberflächen des Zuluftgebläses (16) auf einer inneren Oberfläche von einer angeformten Ansaugkammer (15b) abgestützt sind, die das Zuluftgebläse (16) aufnimmt und einen Teil des Zuluftdurchlasses (22) bildet.

2. Wärmeaustausch-Belüftungsvorrichtung (90), in welcher ein Zuluftdurchlass (22), der Außenluft aus einem außenseitigen Einlass (21) durch ein Zuluftgebläse (16) ansaugt und einer Innenseite eines Raumes aus einem innenseitigen Auslass (23) durch einen Zuluftwärmeaustauschdurchlass (11a) eines Wärmetauschers (11) zuführt, und ein Abluftdurchlass (26), der Innenluft aus einem innenseitigen Einlass (25) durch ein Abluftgebläse (17) ansaugt und zu einer Außenseites des Raumes aus einem außenseitigen Auslass (27) durch einen Abluftwärmeaustauschdurchlass (11b) des Wärmetauschers (11) auslässt, in einem rechteckigen quaderförmigen Gehäuse (13) ausgebildet sind, **dadurch gekennzeichnet, dass**
nur eine einzige Oberfläche des Abluftgebläses (17) auf einer einzigen Oberfläche des Gehäuses (13) aufgeschraubt ist, und
andere Oberflächen des Abluftgebläses (17) auf einer inneren Oberfläche von einer angeformten Abluftkammer (15c) abgestützt sind, die das Abluftgebläse (17) aufnimmt und einen Teil des Abluftdurchlasses (26) bildet.

## Revendications

1. Appareil de ventilation à échange thermique (90) dans lequel un passage d'air d'alimentation (22) qui aspire l'air extérieur à partir d'une entrée côté extérieur (21) à l'aide d'une soufflante d'air d'alimentation (16) et l'introduit à l'intérieur d'une pièce à partir d'une sortie côté intérieur (23) à travers un passage à échange thermique d'air d'alimentation (11a) d'un échangeur thermique (11) et un passage d'air d'échappement (26) qui aspire l'air intérieur à partir d'une entrée côté intérieur (25) à l'aide d'une soufflante d'air d'échappement (17) et l'évacue vers l'extérieur de la pièce à partir d'une sortie côté extérieur (27) à travers un passage à échange thermique à air d'échappement (11b) de l'échangeur thermique (11) sont formés dans un caisson parallélépipédique rectangulaire (13),
**caractérisé en ce que**
une seule surface de la soufflante d'air d'alimentation (16) est vissée sur une surface du caisson (13) et
les autres surfaces de la soufflante d'air d'alimentation (16) reposent sur une surface interne d'une chambre d'aspiration moulée d'une seule pièce (15b) qui loge la soufflante d'air d'alimentation (16) et fait partie du passage d'air d'alimentation (22).

2. Appareil de ventilation à échange thermique (90) dans lequel un passage d'air d'alimentation (22) qui aspire l'air extérieur à partir d'une entrée côté extérieur (21) à l'aide d'une soufflante d'air d'alimentation (16) et l'introduit à l'intérieur d'une pièce à partir d'une sortie côté intérieur (23) à travers un passage à échange thermique d'air d'alimentation (11a) d'un échangeur thermique (11) et un passage d'air d'échappement (26) qui aspire l'air intérieur à partir d'une entrée côté intérieur (25) à l'aide d'une soufflante d'air d'échappement (17) et l'évacue vers l'extérieur de la pièce à partir d'une sortie côté extérieur (27) à travers un passage à échange thermique à air d'échappement (11b) de l'échangeur thermique (11) sont formés dans un caisson parallélépipédique rectangulaire (13),
**caractérisé en ce que**
une seule surface de la soufflante d'air d'alimentation (17) est vissée sur une surface du caisson (13) et
les autres surfaces de la soufflante d'air d'alimentation (17) reposent sur une surface interne d'une chambre d'aspiration moulée d'une seule pièce (15c) qui loge la soufflante d'air d'échappement (17) et fait partie du passage d'air d'échappement (26).
